# EUROPÄISCHE PATENTSCHRIFT

(11) **EP 1 088 577 B1**
(45) Veröffentlichungstag und Bekanntmachung des Hinweises auf die Patenterteilung: **24.05.2006**
(21) Anmeldenummer: 00111611.0
(22) Anmeldetag: 31.05.2000
(51) Int. Cl.: B01D 3/32

(54) **Kolonnentrennwand**
Dividing wall for columns
Paroi de séparation pour colonnes

(30) Priorität: 30.09.1999 DE 19947246
(43) Veröffentlichungstag der Anmeldung: 04.04.2001
(73) Patentinhaber: JULIUS MONTZ GmbH, D-40723 Hilden (DE)
(72) Erfinder: Jansen, Helmut, 41542 Dormagen (DE); Leben, Jochen, 40221 Düsseldorf (DE); Rietfort, Thomas, 46236 Bottrop (DE); Zich, Egon, 42799 Leichlingen (DE)
(74) Vertreter: COHAUSZ DAWIDOWICZ HANNIG & SOZIEN

(56) Entgegenhaltungen:
- EP-A- 0 804 951
- DE-A- 4 336 983
- DE-A- 4 336 985

## Beschreibung

Die Erfindung betrifft eine Trennwand für eine Kolonne, die Trennungen und/oder chemische Reaktionen durchführt.

Bei der Auftrennung von Zulaufstoffgemischen in mehr als zwei Fraktionen werden häufig, um den apparativen Aufwand begrenzt zu halten, Kolonnen mit dampfförmigen oder flüssigen Seitenabzügen eingesetzt. Die abgezogenen Seitenprodukte sind in der Regel nie völlig rein, d.h. diese Produkte sind meist verunreinigt mit anderen, nicht gänzlich abtrennbaren Stoffen. Um Seitenprodukte in reiner Form zu erhalten werden Trennwandkolonnen eingesetzt.

Es ist bekannt in einer Kolonne Trennwände einzusetzen, um damit den Innenraum der Kolonne in Teilbereiche zu unterteilen. So ist aus der EP 0 122 367 bekannt, in einem Teilbereich von Destillationskolonnen, unterhalb und/oder oberhalb der Zulaufstelle des zu trennenden Stoffgemisches und der Seitenentnahme, Trenneinrichtungen zur Verhinderung einer Quervermischung von Flüssigkeits- und/oder Brüdenstrom anzubringen. Diese Trennwände teilen das Innere der Kolonne in ein Zulaufteil, in den das zu trennende Stoffgemisch eintritt, und ein Entnahmeteil, von dem aus ein oder mehrere Seitenabzüge abgehen. Durch diese Einbauten verringert sich bei der Auftrennung von Vielkomponentengemischen die Zahl der insgesamt benötigten Destillationskolonnen.

Hierbei sind die Trennvorrichtungen als durchgehende Trennbleche zwischen den Kolonnenwänden ausgeführt. Die Höhe der einstückigen Trennbleche ist in der Regel größer als der Kolonnendurchmesser, aber zumindest gleich dem Abstand zwischen den einzelnen horizontal angeordneten Trennböden in der Kolonne.

Die Verwendung durchgehender Trennbieche hat mehrere Nachteile. Dies Nachteile sind gravierender, je größer der Durchmesser der Kolonnen ist. Der Einbau der einstückigen Trennbleche in die Kolonne ist aufgrund ihrer Sperrigkeit und ihres Gewichts schwierig. Ab einer bestimmten Kolonnengröße ist der Einbau nur mit maschineller Hilfe möglich, wodurch zusätzliche Kosten entstehen. Weiterhin birgt das zunehmende Gewicht größerer Trennbleche eine erhöhte Verletzungsgefahr für die Arbeiter, die beim Einbau benötigt werden. Es kommt leicht zu Verkantungen beim Einbau, wodurch sowohl das Trennblech, als auch die Innenwandseite der Kolonne beschädigt werden kann. Aufgrund von Kolonnenunrundheiten ist eine gute Abdichtung zwischen Trennblech und Kolonneninnenwand schwierig zu erreichen. d.h. das Trennblech kann sich den Unrundheiten nur sehr schlecht anpassen. Eventuelle undichte Stellen müssen durch zusätzliche konstruktive Maßnahmen ausgeglichen werden, wodurch störende Bauteile in den Kolonneninnenraum eingebracht werden, die wiederum höhere Kosten verursachen.

Aufgabe der Erfindung ist es, eine konstruktive Ausgestaltung der Trennwand zu erreichen, die den Einbau der Trennwand in die Kolonne vereinfacht, preiswert gestaltet, durch den Verzicht auf zusätzliche Maschinen, die das Verletzungsrisiko für die Einbauenden senkt und die eine bessere Dichtigkeit zwischen Kolonneninnenwand und Trennwand gewährleistet.

Diese Aufgabe wird erfindungsgemäß dadurch gelöst, daß die Trennwand mindestens zwei in derselben Ebene übereinander und/oder nebeneinander angeordnete Trennwandelemente aufweist, die durch mindestens eine Steck- und/oder Klemmverbindung miteinander verbunden sind, und dass an den Seiten der Trennwandelemente, die an der Kolonneninnenwand angrenzen, Dichtelemente angeordnet sind.

Die mit der Erfindung erzielten Vorteile bestehen insbesondere darin, daß eine Trennwand erzeugt werden kann, die aus mehreren losen Trennwandelementen zusammengesetzt ist. Die Trennwand ist somit individuell an die Größe der Kolonne anpassbar. Der Einbau der Trennwand in die Kolonne ist einfach. Die einzelnen Trennwandelemente sind aufgrund ihrer Abmessungen relativ leicht. Die Trennwand kann deshalb ausschließlich durch menschliche Arbeitskraft zusammengesetzt werden, ohne den Einsatz zusätzlicher Maschinen, wodurch erhebliche Kosten eingespart werden können und das Verletzungsrisiko für die einbauenden Arbeiter deutlich herabgesetzt wird. Durch diese Art des Zusammenbauens der Trennwand kann ebenfalls vermieden werden, daß es zu Beschädigungen an der Trennwand oder an der Kolonne, insbesondere an der Kolonneninnenwand, kommt. Das leichte Gewicht und die im Vergleich zum Kolonneninnendurchmesser kleinere Abmessung der einzelnen Trennwandelemente ermöglichen einen Einbau, ohne ein Verkanten oder Anecken, wodurch Beschädigungen verhindert werden. Weiterhin kann durch die individuelle Anpassung eine bessere Dichtigkeit zwischen Kolonnen-innenwand und Trennwand erreicht werden. Ebenfalls vorteilhaft ist, daß die einzelnen Trennwandelemente unterschiedliche Breiten und Höhen aufweisen können, wodurch beim Zusammenfügen jede beliebige Breite oder Höhe der Trennwand erreicht werden kann.

Die Steck- und/oder Klemmverbindungen ermöglichen ein leichtes Zusammenfügen der einzelnen Trennwandelemente. Dadurch, daß die Trennwandelemente durch mindestens eine Steck- und/oder Klemmverbindungen verbunden sind, ist ein fester, sicherer Halt zwischen den einzelnen Trennwandelementen gewährleistet. Durch diese Verbindungsform wird ermöglicht, daß die Trennwandelemente ineinander gleiten.

Durch Dichtelemente wird vermieden, daß zwischen den Rändern der Trennwand und der Kotonneninnenwand Flüssigkeit oder Brüden auf die jeweilige andere Seite der Trennwand übertritt. Bei stärkeren Unrundheiten der Kolonneninnenwand erweisen sich seitliche Abdichtungen als besonders vorteilhaft.

Eine vorteilhafte Ausgestaltung der Erfindung ist in Patentanspruch 2 angegeben. Dadurch, daß an mindestes einer Seite des Trennwandelements die Steck- und/oder Klemmverbindungen verstellbar angebracht werden können, wird es ermöglicht, daß die Trennwandelemente zu jeder beliebigen Breite und Höhe zusammengesetzt werden können. Durch Verstellen der Steck- und/oder Klemmverbindungen an den Trennwandelementen können kleinste Veränderungen bezüglich der Höhe oder Breite der gesamten Trennwand vorgenommen werden. Jedes denkbare Abmaß der Trennwand ist zunächst durch die Vielzahl der Trennwandelemente erzeugbar, kleinere Anpassungen werden dann durch des variable Verstellen der Steck- und/oder Klemmverbindungen durchgeführt.

Eine Ausgestaltung der Erfindung, wie in Anspruch 3 beschrieben, ist besonders vorteilhaft. Zur Bildung der Steck- und/oder Klemmverbindung an einem Rand des Trennwandelements ist seitlich und parallel zum Rand ein Streifen befestigt, der mit dem Rand des Trennwandelements einen Zwischenraum für den Rand eines benachbarten Trennwandelements bildet. Dieser Streifen ist an der Seitenfläche des Trennwandelements angebracht.

Eine Ausgestaltung der Erfindung, wie in Anspruch 4 angegeben, schafft eine sehr einfache Konstruktion der Steck- und/oder Klemmverbindung. Hierbei sind an einer Randseite des Trennwandelements, an beiden Seitenflächen jeweils ein Streifen den Rand überlappend angebracht. Die beiden überlappenden Streifen bilden zusammen mit dem Rand des Trennwandelements einen kanalförmigen Zwischenraum, in den ein anderes Trennwandelement eingeschoben werden kann. Die Länge der Streifen erstreckt sich über die gesamte Breite des Trennwandelements und/oder bis kurz vor den Rand des Trennwandelements.

Günstig ist ebenfalls eine Ausgestaltung des Anmeldegegenstandes, wie in Patentanspruch 5 beschrieben. Ein erster Streifen ist parallel zu dem Trennwandelement angebracht und ein zweiter Streifen oder ein Zwischenelement ist als Abstandhalter zwischen dem ersten Streifen und dem Trennwandelement angeordnet. Der erste Streifen überlappt den zweiten Streifen oder das Zwischenelement in Richtung des Randes des Trennwandelements. Dadurch entsteht ein Zwischenraum oder Kanal in den ein benachbartes Trennwandelement einfügt werden kann. Einfach ist es als Abstandhalter einen einfachen Streifen in der Dicke eines Trennwandelements parallel und nahe des Randes des Trennwandelements anzuordnen. Der Streifen ist mittig über der Breite des Trennwandelements angeordnet, so daß an beiden Enden des Streifen ein geringer Abstand bleibt. Der Abstandhalter kann auch eine Ausgestaltung, wie z.B. eine Schraubenmutter oder ein festes eckiges Profil, haben. Sind die einzelnen Elemente durch Schraubverbindungen miteinander verbunden, so sind Schraubenmuttern eine einfache Möglichkeit den Abstand herzustellen. Der Abstand zwischen dem ersten Streifen und dem Trennwandelement, der durch den Abstandhalter hergestellt wird, beträgt die Breite eines Trennwandelements, so daß ein eingefügtes anderes Trennwandelement paßgenau und dicht abschließend in diesem Zwischenraum angeordnet ist.

Eine Vorrichtung nach Anspruch 6 ist eine weitere Möglichkeit der Ausgestaltung des Anmeldegegenstands. Das Trennwandelement ist zum Rand hin, zur Bildung einer Stufe, zweifach abgewinkelt. Dabei ist die Fläche des äußersten Randstücks, welches nach zweimaligem Abwinkeln entsteht, parallel zur Fläche des eigentlichen Trennwandelements. An der Seitenfläche des Trennwandelements, zu der der Randbereich nicht abgewinkelt ist, ist ein Streifen die Kante überlappend angeordnet. Die Kante ist durch das Abwinkeln entstanden. Zwischen überlappendem Streifen und zweifach abgewinkeltem Trennwandelement entsteht ein Kanal, in den ein anderes Trennwandelement eingefügt werden kann.

Die Länge der Streifen hängt davon ab, ob an den Seiten des Trennwandelements ebenfalls Steck- bzw. Klemmverbindungen angeordnet sind. Die Streifen können kürzer oder gleich lang, wie die Breite des Trennwandelements sein. Eine andere vorteilhafte Version des Anmeldungsgegenstands offenbart Anspruch 7. Hierbei ist an dem Trennwandelement ein zweifach abgewinkelter Streifen, zur Bildung einer Stufe, angebracht. Dabei ist der Streifen so geformt, daß er zwei parallele Flächen besitzt, von denen eine nahe des Randes des Trennwandelements, an diesem angebracht ist, so daß die andere parallele Fläche mit dem Rand des Trennwandelements einen Zwischenraum bildet. Je nach Anzahl und Anbringung der Steck- bzw. Klemmverbindungen variiert die Länge des Streifens.

Die Streifen zweier benachbarter Trennwandelemente, die in einer Linie liegen, sind so ausgebildet, daß sie mit ihren Enden immer aneinander liegen und damit einen durchgehenden Streifen und somit eine dichte Verbindung bilden.

Vorteilhaft ist es, wenn die Elemente der Steck- bzw. Klemmverbindungen, insbesondere die Streifen oder Abstandhalter, durch Schweißverbindungen an dem Trennwandelement befestigt sind. Insbesondere Punktschweißverbindungen oder Rollenpunktschweißverbindungen sind gut geeignet. Die Streifen sind auf diese Weise leicht an jeder beliebigen Position an den Trennwandelementen befestigbar. Die Schweißverbindungen ermöglichen weiterhin eine dichte Verbindungen zwischen Streifen und Trennwandelement..

Eine weitere einfache Möglichkeit die Elemente der Steck- bzw. Klemmverbindungen an den Trennwandelementen zu befestigen, stellen Schraubverbindungen dar. Der große Vorteil hierbei ist, daß die Befestigung sehr leicht gelöst werden kann. Ein Versetzen des Streifen ist somit leicht durchzuführen. Die Breite des Kanals bzw. des Zwischenraums läßt sich durch diese Art der Verbindung leicht verstellen. Ebenso leicht ist das Demontieren einzelner Trennwandbereiche oder der gesamten Trennwand. Reparaturen lassen sich einfach und kostengünstig durchführen. Wenn in der Kolonne ein Durchstieg von der Zulaufseite zur Entnahmeseite hergestellt werden soll, eignen sich Schraubverbindungen besonders. Streifen und Zwischenelemente aus Metall oder Kunststoff eignen sich besonders gut, da sie den Anforderungen in der Kolonne gewachsen sind. Dabei verfügen die Trennwandelemente über eine Wandstärke, die eine ausreichende Stabilität gewährleistet. Besonders in Hinblick auf die Einbautoleranzen der Packungen verfügen die Trennwandelemente über eine hinreichende Stabilität. Die Höhe und Breite der einzelnen Trennwandelemente ist variabel. Günstig ist es, wenn die Höhe der einzelnen Trennwandelemente mindestens der Höhe einer Packung entspricht, die je nach Fabrikat etwa 16 bis 22 cm beträgt. Die Höhe der Trennwandelemente bestimmt sich hauptsächlich durch Montagegesichtspunkte hinsichtlich des Gewichts und durch die Zugänglichkeit beim Einbau der Packungsanlagen.

Als Dichtelemente eignen sich insbesondere Dichtlippen. Diese sind in der Regel aus Metall ausgeführt. Bei verminderten Ansprüchen an die Produktreinheit des abzuziehenden Seitenprodukts, können die Dichtlippen auch aus Metallgewebe bestehen. Die Dichtlippen sind federnd angebracht, so daß sie Unrundheiten des Kolonneninnenmantels ausgleichen können. Sie passen sich der Koionneninnenwand an. Die Dichtelemente sind an den Rändern der Trennwandelemente angeordnet, die an der Koionneninnenwand anliegen. Eine einfache Befestigung der Metalldichtlippen schafft eine Schweißverbindung. Schraub- oder Klebverbindungen sind ebenfalls geeignet, die Metalldichtlippen an den Trennwandelementen anzubringen. Bei Metallgewebedichtlippen sind Schraub-, Klemm- oder Klebverbindungen besonders geeignet.

Eine rechteckförmige Ausgestaltung der Trennwandelemente ist besonders geeignet. Bei so ausgebildeten Trennwandelementen ist das Zusammenfügen der einzelnen Elemente zu der gesamten Trennwand sehr leicht durchzuführen.

Weitere Einzelheiten und Vorteile des Erfindungsgegenstandes ergeben sich aus der nachfolgenden Beschreibung der zugehörigen Zeichnungen, in der bevorzugte Ausführungsbeispiele mit den dazu notwendigen Einzelheiten dargestellt sind. Es zeigen:
- Fig 1:: Trennwandelement, mit an den Rändern angeordneten Streifen sowie Dichtlippen, als Dichtelement;
- Fig 2:: Trennwandelement, mit einem ersten Streifen und einem zweiten Streifen oder einem Zwischenelement (5) als Abstandhalter zwischen dem ersten Streifen (4) und dem Trennwandelement (2);
- Fig 3:: Trennwandelement, mit einem zweifach abgewinkelten Streifen;
- Fig 4:: Trennwandelement, mit jeweils einem Streifen auf beiden Seiten des Trennwandelements;
- Fig 5:: Trennwandelement, welches zum Rand hin zweifach abgewinkelt ist, mit einem an dem nicht abgewinkelten Randbereich des Trennwandelements angeordneten Streifen;
- Fig 6:: Trennwandelement, mit einem ersten Streifen und einem zweiten Streifen oder einem Zwischenelement (5) als Abstandhalter zwischen dem ersten Streifen (4) und dem Trennwandelement (2), und einer Schraubverbindung;
- Fig 7:: Trennwandelement, mit einem ersten Streifen und einem zweiten Streifen oder einem Zwischenelement (5) als Abstandhalter zwischen dem ersten Streifen (4) und dem Trennwandelement (2), und Schweißverbindungen zwischen den einzelnen Elementen;
- Fig 8:: Kolonne, mit Trennwand und Dichtlippen als Dichtelemente; Fig 9 Seitenansicht zweier ineinander gesteckter Trennwandelemente;
- Fig 10:: Zwei fest ineinander gesteckte Trennwandelemente, mit an den Rändern angeordneten Streifen;
- Fig 11:: Ansicht eines Trennwandelements, insbesondere der Seite, die zur Verbindung mit einem anderen Trennwandelement geeignet ist.

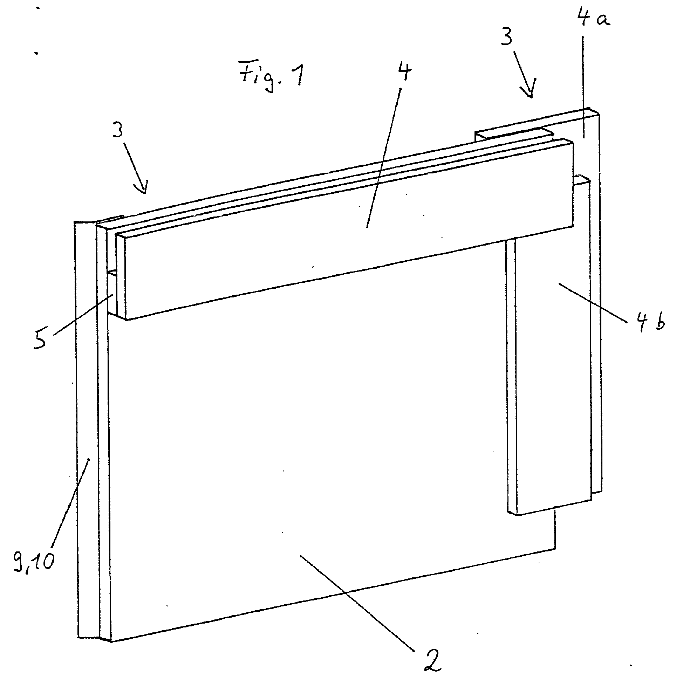

Die Fig. 1 zeigt ein rechteckiges Trennwandelement (2), welches als Randstück der gesamten Trennwand zur Kolonneninnenwand dient. An dem oberen Rand der Trennwandelements (2) ist ein erster Streifen (4) sowie ein zweiter Streifen (5), der als Abstandhalter dient, angeordnet. Der zweite Streifen (5) ist so angeordnet, daß er mit dem Trennwandelement (2) und dem ersten Streifen (4) einen Zwischenraum bildet. An der Seite des Trennwandelement (2), die nicht an der Kolonneninnenwand angrenzt, sind jeweils auf beiden Seiten des Trennwandelements (2) Streifen (4a,4b) angeordnet, die das Trennwandelement (2) überlappen. Der vordere Streifen (4b) hat zum oberen und unteren Rand des Trennwandelements (2) einen gleich großen Abstand, wie der zweite Streifen (5) zum oberen Rand des Trennwandelements (2), während der hintere Streifen (4a) oben bis zur Oberseite des Trennwandelements (2) geht.

Die Streifen (4, 4a, 4b, 5) sind so dimensioniert, daß sie, wenn die einzelnen Trennwandelemente (2) vollständig ineinandergesteckt sind, an ihren schmalen Seiten Kontakt zu einem benachbarten Trennwandelement (2) oder zu einem Streifen (4, 4a, 4b, 5) eines benachbarten Trennwandelements (2) aufweisen und dadurch eine durchgehende dichte Verbindung herstellen. Das Trennwandelement (2) kann im Bereich, in dem die Streifen (4a) und (4b) das Trennwandelement (2) überlappen, aber auch auseinander geschoben werden. Es bleibt eine dichte Verbindung bestehen, da die Streifen (4a) und (4b) die entstehende Lücke weiterhin überdecken,

An der Seite des Trennwandelements (2), die durch die Kolonneninnenwand begrenzt wird, ist ein Dichtelement (9) angeordnet. In Fig. 1 ist eine Dichtelement (9) bestehend aus einer Dichtlippe (10) aus dünnen geschlitzten Blech dargestellt. Diese Dichtlippe (10) ist einseitig an dem Rand des Trennwandelements (2) verstellbar angebracht. Inwieweit die Dichtlippe (10) den Rand des Trennwandelements (2) überlappt ist somit für jedes einzelne Trennwandelement (2) individuell einstellbar, so daß es jeder Entfernung zur Kolonneninnenwand anpassbar ist. Die federnde Form des Dichtelements (9) gewährleistet eine dichte Anpassung an die Kalanneninnenwand. Vorteilhafterweise ist die Dichtlippe (10) aus Blech gefertigt Dichtlippen (10) aus Metallgewebe sind besonders gut geeignet, wenn verminderte Ansprüche an die Produktreinheit gestellt werden. Federnde Dichtelemente (9) aus anderen Materialien, wie z.B. Kunststoff sind ebenfalls einsetzbar.

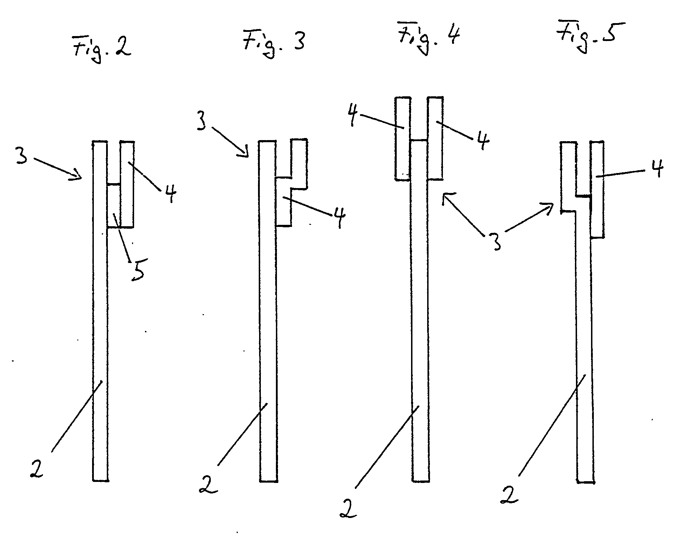

In den Fig. 2 bis Fig. 5 sind Seitenansichten der Trennwandelemente (2) mit Teilen der Klemm- bzw. Steckverbindung (3) dargestellt.Fig. 2 zeigt ein Trennwandelement mit einem ersten Streifen und einem zweiten Streifen oder einem Zwischenelement (5), als Abstandhalter, zwischen dem ersten Streifen (4) und dem Trennwandelement (2). Das Trennwandelement (2), der Streifen (4) sowie der Streifen (5) bilden einen Zwischenraum, in den ein benachbartes Trennwandelement (2) eingefügt werden kann. Dieses ist so eingefügt, daß eine dichte Verbindung zwischen den jeweiligen benachbarten Trennwandelementen (2) entsteht.

Eine Alternative zu Fig. 2 stellt Fig. 3 dar. Hier sind nicht zwei Streifen am Rand des Trennwandelements (2) angeordnet, sondern ein zweifach abgewinkelter Streifen (4). Dieser hat die Form einer Stufe und bildet vergleichbar zu Fig. 2 ebenfalls mit dem Trennwandelement (2) einen Zwischenraum zur Aufnahme eines anderen Trennwandelements (2).

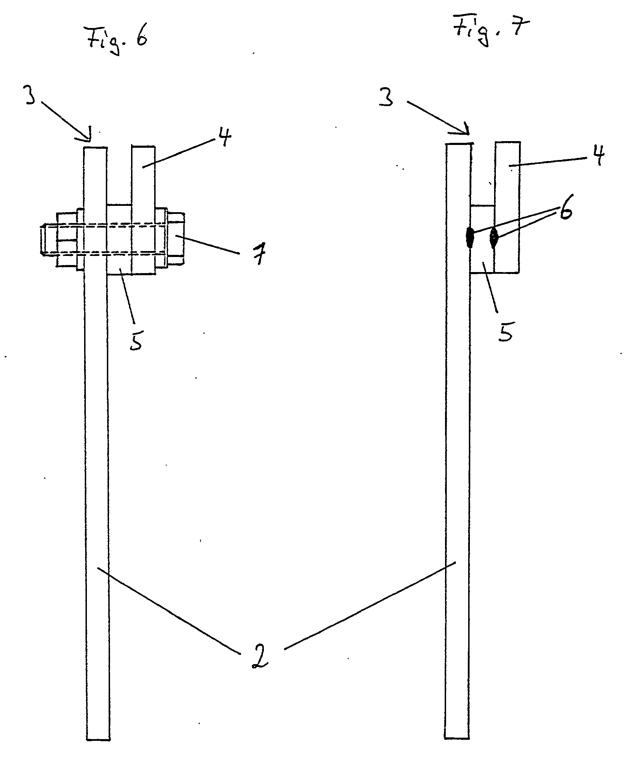

Fig. 4 zeigt die Anordnung zweier Streifen (4) an beiden Seiten des Randes eines Trennwandelements (2). Beide Streifen (4) überlappen den Rand des Trennwandelements (2) und bilden so mit diesem den Zwischenraum zur Aufnahme eines anderen Trennwandelements (2).

Eine weitere Alternative stellt Fig. 5 dar. Das Trennwandelement (2) ist zum Rand hin zweifach abgewinkelt, zur Bildung einer Stufe. Ein Streifen (4) überlappt an der Seite des Trennwandelements (2), zu der das Trennwandelement (2) nicht abgewinkelt ist, dieses und bildet so mit diesem den notwendigen Zwischenraum.

Alle Streifen sind so an dem Trennwandelement (2) angeordnet, daß sie mit einer ausreichend großen Fläche am oberen Rand des Trennwandelements (2) anliegen und einen festen und sicheren Halt gewährleisten.

Fig. 6 und 7 zeigen Beßstigungsmöglichkeiten der einzelnen Elemente der Steck- und/oder Klemmverbindung (3).

In Fig. 6 ist eine Schraubverbindung (7) dargestellt. Das Trennwandelement (2) und die Streifen (4) und (5) weisen längliche Öffnungen auf, durch die das Schraubelement (7) verschiebbar befestigt werden kann. Auf diese Weise kann die Höhe und Breite benachbarter Trennwandelemente (2) sowie der gesamten Trennwand individuell eingestellt werden. Die Schraubverbindungen ermöglichen ein leichtes Lösen der Steck- und/oder Klemmverbindung (3) und damit einen leichten Abbau und Wiederaufbau der Trennwand oder einer anderen Trennwand.

Schweißverbindungen (6), wie in Fig. 7 dargestellt, zwischen den einzelnen Elementen der Steck- und/oder Klemmverbindung, nämlich dem Trennwandelement (2), Streifen (4) und Streifen (5) schaffen ebenfalls eine festen und dichte Verbindung.

Besonders vorteilhaft sind Punktschweißverbindungen oder Rollenpunktschweißverbindungen. Klebverbindungen sind z.B. bei Kunststoffelementen einsetzbar.

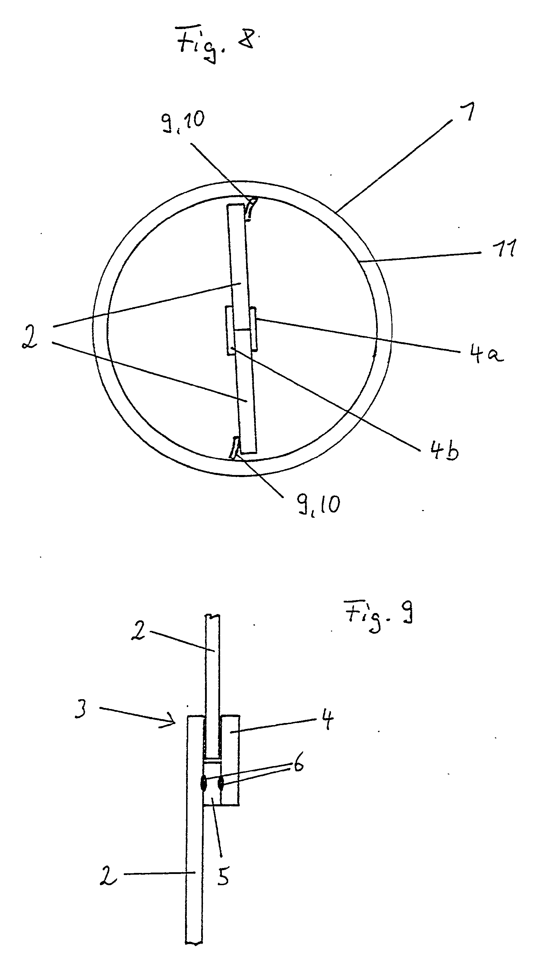

Fig. 8 zeigt einen Querschnitt durch eine Kolonne (1) mit Trennwand, wobei die Trennwand in ihrer Breite zwei Trennwandelemente (2) aufweist. Die Streifen (4a) und (4b), die Teile der Steck- und Klemmverbindung bilden, verbinden die beiden Trennelemente (2). An den Rändern der Trennwandelemente (2), die an der Kolonneninnenwand (11) angrenzen, sind die Dichtelemente (9) bzw. Dichtlippen (10) federnd **angeordnet.**

Die Trennwand muß die Kolonne nicht in zwei gleich große Kolonnenhälften unterteilen. Sie kann die Kolonne in unterschiedlich große Bereich teilen. Die Anbringung mehrerer Trennwände in der Kolonne ist ebenfalls möglich. Diese können nebeneinander, übereinander oder versetzt zueinander angeordnet sein. Im Bereich der Streifen (4a, 4b) kann man die Trennwandelemente (2) auseinanderschieben und so am Kolonnendurchmesser anpassen.

In Fig. 9 wird exemplarisch dargestellt, wie zwei Trennwandelemente (2) zusammengesteckt bzw. -geklemmt sind. Das obere Trennwandelement (2) ist in den Zwischenraum der Steck- bzw. Klemmverbindung (3) des unteren Trennwandelements (2) fest und dicht eingefügt.

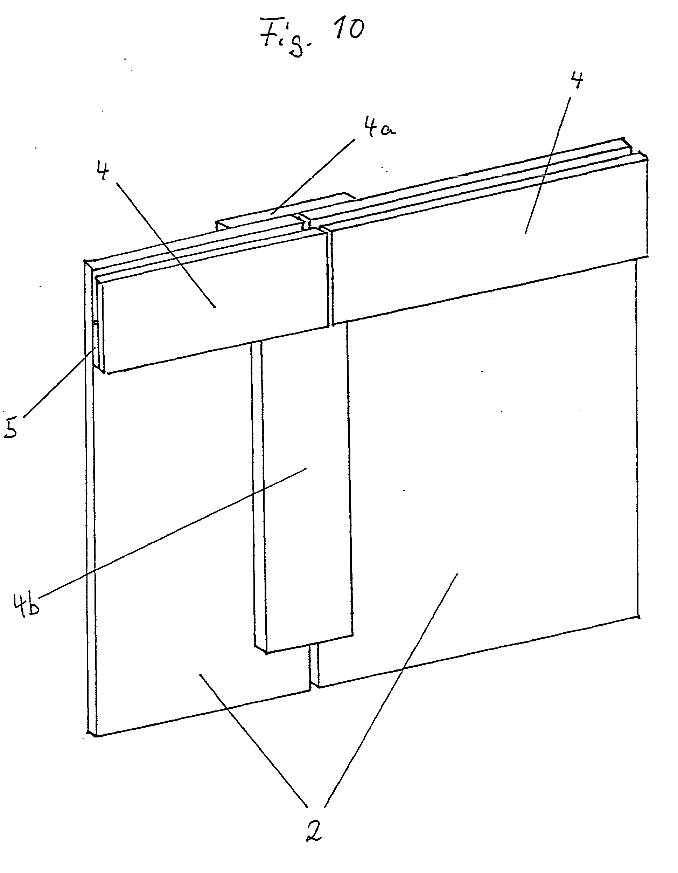

Fig. 10 zeigt zwei ineinandergesteckte Trennwandelemente (2). Die Lücke zwischen den zwei Trennwandelementen (2) wird durch die Streifen (4a, 4b) überlappt und stellen so eine absolut dichte Verbindung zwischen den beiden Trennwandelementen (2) her.

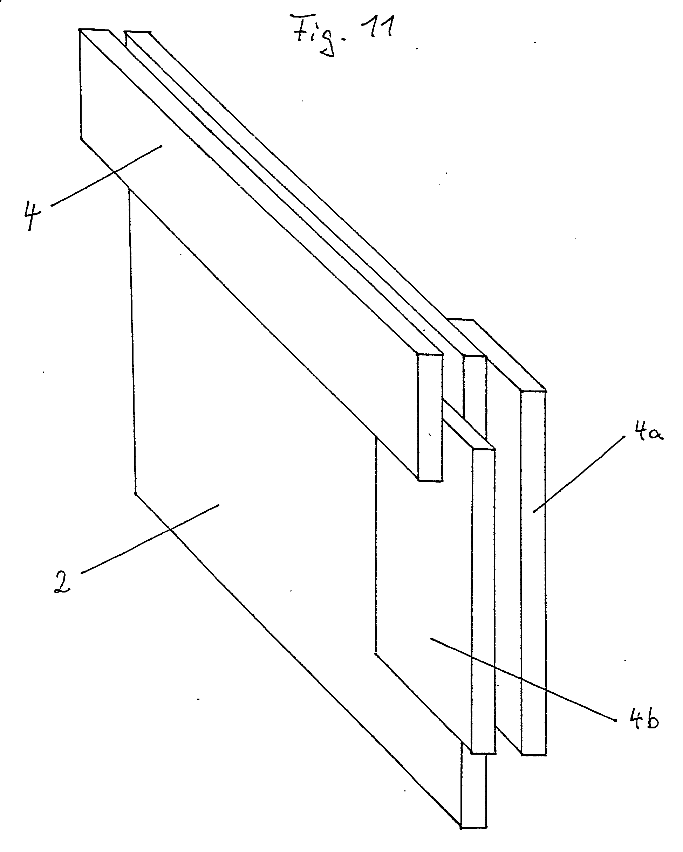

Fig. 11 verdeutlicht, wie die einzelnen Streifen (4, 4a, 4b) an dem Trennwandelement (2) angeordnet sind und so die Steck- und/oder Klemmverbindung schaffen.

## Patentansprüche

1. Trennwand für eine Kolonne (1), die Trennungen und/oder chemische Reaktionen durchführt, **dadurch gekennzeichnet, daß** die Trennwand mindestens zwei in derselben Ebene übereinander und/oder nebeneinander angeordnete Trennwandelemente (2) aufweist, die durch mindestens eine Steck- und/oder Klemmverbindung (3) miteinander verbunden sind, und daß an den Seiten der Trennwandelemente (2), die an der Kolonneninnenwand (11) angrenzen, Dichtelemente (9) angeordnet sind.

2. Trennwand nach Anspruch 1 oder 2, **dadurch gekennzeichnet, daß** die Steck- und/oder Klemmverbindung (3) an mindestens einer Seite des Trennwandelements (2) verstellbar angebracht ist.

3. Trennwand nach einem der vorherigen Ansprüche, **dadurch gekennzeichnet, daß** zur Bildung der Steck- und/oder Klemmverbindung (3) an einem Rand des Trennwandelements (2) seitlich und parallel zum Rand ein Streifen (4) befestigt ist, der mit dem Rand des Trennwandelements (2) einen Zwischenraum für den Rand eines benachbarten Trenriwandelements (2) bildet

4. Trennwand nach einem der vorherigen Ansprüche, **dadurch gekennzeichnet, daß** jeweils ein Streifen (4) auf beiden Seiten des Trennwandelements (2) angeordnet ist, die beide den Rand des Trennwandelements (2) überlappen.

5. Trennwand nach einem der Ansprüche 1 bis 3, **dadurch gekennzeichnet, daß** ein erster Streifen (4) parallel zu dem Trennwandelement (2) angebracht ist und daß ein zweiter Streifen oder ein Zwischenelement (5) als Abstandhalter zwischen dem ersten Streifen (4) und dem Trennwandelement (2) angeordnet ist, wobei der erste Streifen (4) den zweiten Streifen oder das Zwischenelement (5) in Richtung des Randes des Trennwandelements (2) überlappt.

6. Trennwand nach einem der Ansprüche 1 bis 3, **dadurch gekennzeichnet, daß** das Trennwandelement (2) zum Rand hin, zur Bildung einer Stufe, zweifach abgewinkelt ist und daß an dem nicht abgewinkelten Randbereich des Trennwandelements (2) der Streifen (4) überlappend angebracht ist.

7. Trennwand nach einem der Anspruche 1 bis 3, **dadurch gekennzeichnet, daß** der Streifen (4) zweifach abgewinkelt ist, zur Bildung einer Stufe, und nahe und parallel zum Rand des Trennwandelements (2) angeordnet ist.

8. Trennwand nach einem der vorherigen Ansprüche, **dadurch gekennzeichnet, daß** die Elemente der Steck- und/oder Klemmverbindung (3) durch Schweißverbindungen (6), insbesondere durch Punktschweißverbindungen und/oder Rollenpunechweißverbindungen, an dem Trennwandelement (2) befestigt sind.

9. Trennwand nach einem der Ansprüche 1 bis 7, **dadurch gekennzeichnet, daß** die Elemente der Steck- und/oder Klemmverbindung (3) durch Schraubverbindungen (7) an dem Trennwandelement (2) befestigt sind.

10. Trennwand nach einem der Ansprüche 4 bis 9, **dadurch gekennzeichnet, daß** die Streifen und/oder Zwischenelemente (4,5) aus Metall oder Kunststoff gefertigt sind.

11. Trennwand nach einem der vorherigen Ansprüche, **dadurch gekennzeichnet, daß** die Dichtelemente (9) Dichtlippen (10) aus dünnen geschlitzten Blech oder Metallgewebe sind.

12. Trennwand nach Anspruch 11, **dadurch gekennzeichneß** daß die Dichtlippen (10) federnd angeordnet sind.

13. Trennwand nach einem der vorherigen Ansprüche, **dadurch gekennzeichnet, daß** die Seitenflächen der Trennwandelemente (2) rechteckförmig oder dreieckförmig sind,

14. Trennwand nach einem der vorherigen Ansprüche, **dadurch gekennzeichnet, daß** zwei Trennwandelemente (2) bei Überlappen der beiden benachbarten Seiten der Trennwandelemente (2) durch die streifen (4a, 4b) eine dichte Verbindung aufweisen.

## Claims

1. Dividing wall for a column (1) which performs separations and/or chemical reactions, **characterised in that** the dividing wall includes at least two dividing wall elements (2) arranged in the same plane one above the other or side-by-side, which are connected to one another by means of at least one plug-in and/or clamped connection (3), and **in that** sealing elements (9) are arranged on the sides of the dividing wall elements (2) bordering the inner wall (11) of the column.

2. Dividing wall according to claim 1, **characterised in that** the plug-in and/or clamped connection (3) is arranged adjustably on at least one side of the dividing wall element (2).

3. Dividing wall according to either of the preceding claims, **characterised in that**, to form the plug-in and/or clamped connection (3), a strip (4) which forms with the edge of the dividing wall element (2) a gap for the edge of an adjacent dividing wall element (2) is fixed to an edge of the dividing wall element (2) laterally and parallel to said edge.

4. Dividing wall according to any one of the preceding claims, **characterised in that** a strip (4) is arranged on each side of the dividing wall element (2), both of which strips (4) overlap the edge of the dividing wall element (2).

5. Dividing wall according to any one of claims 1 to 3, **characterised in that** a first strip (4) is attached parallel to the dividing wall element (2) and **in that** a second strip or an intermediate element (5) is arranged as a spacer between the first strip (4) and the dividing wall element (2), the first strip (4) overlapping the second strip or the intermediate element (5) in the direction of the edge of the dividing wall element (2).

6. Dividing wall according to any one of claims 1 to 3, **characterised in that** the dividing wall element (2) is bent twice towards the edge to form a step, and **in that** the strip (4) is attached overlappingly to the edge portion of the dividing wall element (2) which is not bent.

7. Dividing wall according to any one of claims 1 to 3, **characterised in that** the strip (4) is bent twice to form a step and is arranged near and parallel to the edge of the dividing wall element (2).

8. Dividing wall according to any one of the preceding claims, **characterised in that** the elements of the plug-in and/or clamped connection (3) are fixed to the dividing wall element (2) by welded connections (6), in particular by spot-welded connections and/or roll spot-welded connections.

9. Dividing wall according to any one of claims 1 to 7, **characterised in that** the elements of the plug-in and/or clamped connection (3) are fixed to the dividing wall element (2) by means of screw connections (7).

10. Dividing wall according to any one of claims 4 to 9, **characterised in that** the strips and/or intermediate elements (4, 5) are made of metal or plastics material.

11. Dividing wall according to any one of the preceding claims, **characterised in that** the sealing elements (9) are sealing lips (10) made of thin slotted metal sheet or metallic tissue.

12. Dividing wall according to claim 11, **characterised in that** the sealing lips (10) are arranged resiliently.

13. Dividing wall according to any one of the preceding claims, **characterised in that** the lateral surfaces of the dividing wall elements (2) are rectangular or triangular.

14. Dividing wall according to any one of the preceding claims, **characterised in that**, in the case when two adjacent sides of the dividing wall elements (2) are overlapped by the strips (4a, 4b), the two dividing wall elements (2) have a sealed connection.

## Revendications

1. Cloison pour une colonne (1), qui réalise des séparations et/ou des réactions chimiques, **caractérisée en ce que** la cloison comporte au moins deux éléments de cloison (2) juxtaposés et/ou superposés dans le même plan, mutuellement assemblés par au moins un assemblage par emboîtement et/ou serrage (3), et que des éléments d'étanchéité (9) sont disposés sur les côtés des éléments de cloison (2) limitrophes à la paroi intérieure (11) de la colonne.

2. Cloison suivant l'une des revendications 1 et 2, **caractérisée en ce que** l'assemblage par emboîtement et/ou serrage (3) est disposé avec une possibilité d'ajustement sur au moins un côté de l'élément de cloison (2).

3. Cloison suivant l'une des revendications précédentes, **caractérisée en ce que**, pour former l'assemblage par emboîtement et/ou serrage (3), une bande (4) est fixée latéralement et parallèlement sur un bord de l'élément de cloison (2), laquelle bande forme avec le bord de l'élément de cloison (2) un espace intermédiaire pour le bord d'un élément de cloison limitrophe (2).

4. Cloison suivant l'une des revendications précédentes, **caractérisée en ce qu'**une bande (4) est disposée sur chacun des deux côtés de l'élément de cloison (2), lesquelles bandes chevauchent le bord de l'élément de cloison (2).

5. Cloison suivant l'une des revendications 1 à 3, **caractérisée en ce qu'**une première bande (4) est montée parallèlement à l'élément de cloison (2) et qu'une seconde bande ou un élément intermédiaire (5) en tant qu'écarteur est disposé entre la première bande (4) et l'élément de cloison (2), la première bande (4) chevauchant la seconde bande ou l'élément intermédiaire (5) en direction du bord de l'élément de cloison (2).

6. Cloison suivant l'une des revendications 1 à 3, **caractérisée en ce que** l'élément de cloison (2) est plié deux fois en direction du bord pour former un gradin, et que la bande (4) est montée en chevauchement sur la zone de bordure non pliée de l'élément de cloison (2).

7. Cloison suivant l'une des revendications 1 à 3, **caractérisée en ce que** la bande (4) est pliée deux fois pour former un gradin, et est disposée au voisinage du bord de l'élément de cloison (2) et parallèlement à ce dernier.

8. Cloison suivant l'une des revendications précédentes, **caractérisée en ce que** les éléments de l'assemblage par emboîtement et/ou serrage (3) sont fixés sur l'élément de cloison (2) par des soudures (6), en particulier par des soudures par points et/ou soudures par points à la molette.

9. Cloison suivant l'une des revendications 1 à 7, **caractérisée en ce que** les éléments de l'assemblage par emboîtement et/ou serrage (3) sont fixés sur l'élément de cloison (2) par des vissages (7).

10. Cloison suivant l'une des revendications 4 à 9, **caractérisée en ce que** les bandes et/ou éléments intermédiaires (4, 5) sont fabriqués en métal ou en matière plastique.

11. Cloison suivant l'une des revendications précédentes, **caractérisée en ce que** les éléments d'étanchéité (9) sont des lèvres d'étanchéité (10) en tôle mince fendue ou en tissu métallique.

12. Cloison suivant la revendication 11, **caractérisée en ce que** les lèvres d'étanchéité (10) sont disposées avec élasticité de ressort.

13. Cloison suivant l'une des revendications précédentes, **caractérisée en ce que** les surfaces latérales des éléments de cloison (2) sont rectangulaires ou triangulaires.

14. Cloison suivant l'une des revendications précédentes, **caractérisée en ce que** deux éléments de cloison (2) présentent un assemblage étanche lors du chevauchement des deux côtés limitrophes des éléments (2) par les bandes (4a, 4b).
